# EUROPÄISCHE PATENTSCHRIFT

(11) **EP 4 587 148 B1**
(45) Veröffentlichungstag und Bekanntmachung des Hinweises auf die Patenterteilung: **10.06.2026**
(21) Anmeldenummer: 23755349.0
(22) Anmeldetag: 07.08.2023
(51) Int. Cl.: B01D 29/15, B01D 29/90, B01D 29/92

(54) **FILTERELEMENT UND FILTERVORRICHTUNG**
FILTER ELEMENT AND FILTER DEVICE
ÉLÉMENT FILTRANT ET DISPOSITIF FILTRANT

(30) Priorität: 12.09.2022 DE 102022123191
(43) Veröffentlichungstag der Anmeldung: 23.07.2025
(73) Patentinhaber: Hydac Filtertechnik GmbH, 66280 Sulzbach/Saar (DE)
(72) Erfinder: BACKES, Volker, 66646 Marpingen (DE); RÖDER, Dirk, 66123 Saarbrücken (DE)
(74) Vertreter: Bartels und Partner, Patentanwälte
(86) Internationale Anmeldenummer: PCT/EP2023/071861
(87) Internationale Veröffentlichungsnummer: WO 2024/056282

(56) Entgegenhaltungen:
- EP-B1- 2 490 784
- WO-A1-2007/090249
- DE-U1- 202005 008 679
- JP-U- H02 125 715
- US-B2- 8 337 582

## Beschreibung

Die Erfindung betrifft ein Filterelement, zumindest bestehend aus einem Elementmaterial, das sich zwischen zwei Endkappen erstreckt, von denen zumindest eine Endkappe ein Aufnahmeteil für die Aufnahme des Elementmaterials aufweist sowie ein Anschlussteil für das Anschließen an ein Gehäuseteil, wobei sowohl das Aufnahmeteil als auch das Anschlussteil innenumfangsseitig Durchgangsöffnungen für den Durchtritt von Fluid aufweisen, die gegenüber der Längsachse des Filterelementes zueinander versetzt angeordnet sind. Die Erfindung betrifft des Weiteren eine Filtervorrichtung.

Durch EP 2 490 784 B1 ist ein Filterelement für den Einsatz bei einer zugehörigen Filtervorrichtung bekannt, das an zumindest einem Ende eine Einfassung für einen betreffenden Endrand des Filtermaterials bildende Endkappe aufweist, die zur Lagefixierung des Filterelementes in einer Funktionsposition an einer am Bodenteil des Filtergehäuses befindlichen Elementaufnahme festlegbar ist, wobei die Endkappe an Teilen, die bei der Funktionsposition mit Teilen der Elementaufnahme im betreffenden Filtergehäuse in Eingriff kommen, mit einer Gestaltsunregelmäßigkeit versehen ist, die an eine Gestaltsunregelmäßigkeit, die sich an Teilen der Elementaufnahme befindet derart angepasst ist, dass bei aufeinander ausgerichteter Lagebeziehung der Gestaltsunregelmäßigkeiten der Eingriff zwischen Endkappe und Elementaufnahme und damit das Verbringen des Filterelementes in die Funktionsposition ermöglicht sind, wobei die Endkappe einen Anschlussstutzen aufweist, der sich in einen von einem fluiddurchlässigen Stützrohr umgebenen inneren Filterhohlraum erstreckt und in den ein Rohrstutzen der Elementaufnahme im Filtergehäuse in der Funktionsposition des Filterelementes eingreift, und wobei als der Endkappe zugehörige Gestaltsunregelmäßigkeit der Öffnungsquerschnitt des Anschlussstutzens an die die Gestaltsunregelmäßigkeit der Elementaufnahme bildende unrunde und asymmetrische Außenkontur des Rohrstutzens der Elementaufnahme angepasst ist. Insoweit weisen die innenumfangsseitige Durchgangsöffnung für das Aufnahmeteil mit dem Filterelement und die innenumfangsseitige Durchgangsöffnung des Anschlussteiles für das Anschließen an ein Gehäuseteil, bezogen auf ihre jeweilige Längsachse, einen Versatz zueinander auf.

Dadurch kann ein betreffendes Filterelement nur unter der Voraussetzung in die Funktionsposition verbracht werden, das komplementäre Gestaltsmerkmale an Elementaufnahme und Endkappe derart aneinander angepasst sind, dass sie bei entsprechender, gegenseitiger Ausrichtung den Eingriff zulassen. Somit ist sichergestellt, dass die Filtervorrichtung ausschließlich mit einem Filterelement betreibbar ist, das für einen jeweiligen, speziellen Einsatz vorgesehen ist und die hierfür geltenden, die Betriebssicherheit gewährleistenden Spezifikationen erfüllt.

Durch die dadurch definiert vorgegebene Drehposition des Filterelementes im Filtergehäuse eröffnet sich zudem die weitere vorteilhafte Möglichkeit bei einem Filtergehäuse, das einen seitlichen, der Endkappe des in Funktionsposition befindlichen Filterelementes benachbarten Fluideinlass aufweist, ein Abschirmteil an der Endkappe vorzusehen, das sich entlang der Außenseite des Filtermaterials des Filterelementes erstreckt und bei der Funktionsposition des Filterelementes als Prallschutz den Bereich des Fluideinlasses überdeckt. Durch die festgelegte Drehposition ist sichergestellt, dass sich der Prallschutz dabei verlässlich im Anströmbereich des Filterelementes befindet.

Ausgehend von diesem Stand der Technik liegt der Erfindung die Aufgabe zugrunde unter Beibehalten der Vorteile der bekannten Lösung, nämlich ein betreffendes Filterelement positionssicher in einem zugeordneten Filtergehäuse, vorzugsweise in tauschbarer Weise anzuordnen, eine solche Positionierung des Filterelementes innerhalb eines Filtergehäuses vorzugeben, dass Druckverluste während des Filtrationsbetriebes reduziert sind. Eine dahingehende Aufgabe löst ein Filterelement mit den Merkmalen des Patentanspruches 1 sowie eine Filtervorrichtung mit den Merkmalen des Patentanspruches 9.

Gemäß dem kennzeichnenden Merkmal des Patentanspruches 1 ist vorgesehen, dass das Filterelement zwischen dem Aufnahmeteil und dem Anschlussteil eine Versatzstufe aufweist, die ebenfalls eine Durchgangsöffnung beinhaltet und dass die freien Querschnitte der Durchgangsöffnungen von Aufnahmeteil, Anschlussteil und Versatzstufe, die jeweils senkrecht durch die Längsachse des Filterelementes gehen, gleich sind. Durch die Gleichheit der genannten freien Querschnitte sind Strömungsverluste bei der Abfuhr des Filtratstromes aus dem Filterelement vermieden, dessen Elementmaterial zur Partikelabreinigung von einem Unfiltratstrom von außen nach innen durchströmt ist.

Des Weiteren erlaubt die Versatzstufe am Filterelement den Innenraum des Filterelementes mit der Filtratmenge von seiner Abgabestelle für Filtrat räumlich zu entkoppeln, so dass Filtrataufnahme und Filtratabgabe an voneinander verschiedenen Stellen am Filterelement funktionell vorhanden sind.

Dies erlaubt, insbesondere in Verbindung mit einem Filtergehäuse einer Filtervorrichtung gemäß der Merkmalsausgestaltung des Anspruches 9, dass das Filterelement als Ganzes innerhalb des Filtergehäuses außermittig angebracht werden kann, und zwar derart, dass auf der Zuströmseite des Filtergehäuses über die der Unfiltratstrom zugeführt wird, ein vergrößerter Ringspalt zwischen Außenumfang des Filterelementes und dem banchbarten Innenumfang des zugeordneten Filtergehäuses entsteht, wobei auf der Rückseite des Elementes, also auf der der Zuströmseite abgewandten Seite dieser Ringspalt verringert ist, was zu geringeren Strömungsverlusten sprich zu einem geringeren ΔP führt, als wenn das Element unter Beibehalten gleicher Wandabstände zum Filtergehäuse zentrisch und koaxial zu seiner Längsachse aufgenommen ist. Dies hat so keine Entsprechung im Stand der Technik.

Besonders bevorzugt ist vorgesehen, dass die jeweilige Durchgangsöffnung von Aufnahmeteil und Anschlussteil aus einem kreisringförmigen Hohlzylinder gebildet ist, dass der Hohlzylinder des Aufnahmeteiles konzentrisch zu der Längsachse des Filterelementes verläuft, dass die Längsachse des Hohlzylinders des Anschlussteils mit einem Versatz parallel zur Längsachse des Filterelementes verläuft, und dass die Versatzstufe einen ringförmigen Hohlraum aufspannt, dessen Längsachse die beiden anderen Längsachsen von Aufnahmeteil und Anschlussteil mit einem vorgebbaren Versatzwinkel schneidet, der vorzugsweise zwischen 15° bis 45°, besonders bevorzugt 35°, beträgt. Dergestalt lässt sich auf besonders platzsparende Weise sowohl das Aufnahmeteil als auch das Anschlussteil sowie die dazwischenliegende Versatzstufe in einer Endkappe des Elementmateriales unterbringen, über die die Abfuhr des Filtratstromes aus dem Filterelement erfolgt.

Bei einer weiteren besonders bevorzugten Ausführungsform des erfindungsgemäßen Filterelementes ist vorgesehen, dass die eine Endkappe einen Stromteiler aufweist, der ausgehend von dem einen Aufnahmeteil sich über eine vorgebbare Wegstrecke entlang zumindest eines Teils des Außenumfanges des Elementmaterials erstreckt. Vorzugsweise ist dabei der Stromteiler schalenförmig konzipiert und überdeckt einen Teil des Elementmaterials des Filterelementes, wobei die vorgebbare Wegstrecke derart gewählt ist, dass bei einem Anströmen des Elementmaterials mit Fluid von einer Anströmseite her das Elementmaterial geschützt respektive entlastet ist. Durch die festgelegte Drehposition des Filterelementes innerhalb eines Filtergehäuses ist sichergestellt, dass sich der insoweit hieraus entstehende Prallschutz immer im Anströmbereich des Filterelementes befindet und bevorzugt eine vergleichmäßigte Aufteilung des Unfiltratstroms in Richtung des Elementmaterials vornehmen kann.

Bei einer besonders bevorzugten Ausführungsform des erfindungsgemäßen Filterelementes ist dabei vorgesehen, dass der Stromteiler für eine verbesserte Strömungsführung mit kanalartig verlaufenden Fluiddurchlässen versehen ist. Dabei sind bevorzugt die kanalartigen Fluiddurchlässe in mindestens zwei Gruppen unterteilt, die sich V-förmig von einer Mittenachse des Strömungsteilers wegerstrecken, der insoweit vorzugsweise keilförmig ausgebildet eine gleichmäßige Strömungsaufteilung des anströmenden Fluids in zwei voneinander verschiedene Richtungen ermöglicht. Dadurch, dass der Strömungsteiler keinen geschlossenen Schildkörper als Prallschutz darstellt, kommt über die kanalartigen Fluiddurchlässe das dahinterliegende Elementmaterial nach wie vor in Fluidkontakt und kann insoweit auch im abgedeckten Bereich eine wirksame Partikelfiltration vornehmen.

Die Kombination eines Filterelementes mit dem Anströmschutz respektive Stromteiler führt zu einer Strömungsoptimierung und zu einer homogeneren Strömungsverteilung bzw. Durchströmung des kompletten Filterelementes während des Filtrationsbetriebes. Im Rahmen eines vereinfachten Austauschbetriebs für ein verbrauchtes Filterelement gegen ein Neuelement ist vorgesehen, dass das jeweilige Anschlussteil eines solchen Filterelementes außenumfangsseitig eine Ringnut für die Aufnahme einer normierten Dichteinrichtung aufweist.

Bei einer weiteren besonders bevorzugten Ausführungsform der erfindungsgemäßen Filterelementlösung ist vorgesehen, dass die eine Endkappe im Bereich der Versatzstufe parallel zu der Längsachse des Elementmaterials ausgerichtet, einzelne voneinander beabstandete Längsrippen aufweist, die als fiktive Umhüllende von einem Polygonzug eingefasst sind. Die angesprochene Polygonform als Umhüllende der Längsrippen unterstützt eine genaue Positionierung des Filterelementes innerhalb der Elementaufnahme einer Filtervorrichtung.

Gegenstand der Erfindung ist auch eine Filtervorrichtung mit einem Filtergehäuse, in dem ein Filterelement wie vorstehend beschrieben aufgenommen ist, die dadurch gekennzeichnet ist, dass das Filterelement im Filtergehäuse derart mittels einer Endkappe asymmetrisch aufgenommen ist, dass auf der Zuströmseite mit dem Unfitratstrom ein vergrößerter und auf der demgegenüber abgewandten Seite ein verringerter Ringspalt zwischen dem Filterelement und dem Filtergehäuse geschaffen ist. Dergestalt kommt es zu einer asymmetrischen Elementaufnahme nebst Strömungsführung im zugehörigen Filtergehäuse mit im wesentlichen kreiszylindrisch geformtem Gehäusehohlraum. Bevorzugt ist hierbei vorgesehen, dass die Zuströmseite im Filtergehäuse für die Zufuhr des Unfiltratstroms mit einem vorgebbaren Abstand von dem Stromteiler des Filterelementes für eine vergleichmäßigte Strömungsaufteilung überdeckt ist.

Im Folgenden wird das erfindungsgemäße Filterelement nebst einer zugehörigen Filtervorrichtung anhand eines Ausführungsbeispiels nach der Zeichnung näher erläutert. Dabei zeigen in prinzipieller und nicht maßstäblicher Darstellung die
- Figur 1: in der Art eines Längsschnittes eine Filtervorrichtung als Ganzes;
- Figur 2: eine um 90° in Blickrichtung auf die Figur 1 gesehen nach vorne gedrehte Ansicht der Filtervorrichtung;
- Figur 3: teilweise im Halbschnitt, teilweise in Ansicht ein Filterelement, wie es in einer Filtervorrichtung nach den Figuren 1 und 2 prinzipiell einsetzbar ist; und
- Figuren 4, 5 und 6: in perspektivischer Unteransicht, in Seitenansicht sowie in einer Draufsicht von unten her ein Anschlussteil für die Aufnahme eines Filterelementes gemäß den Darstellungen nach den Figuren 1 und 3.

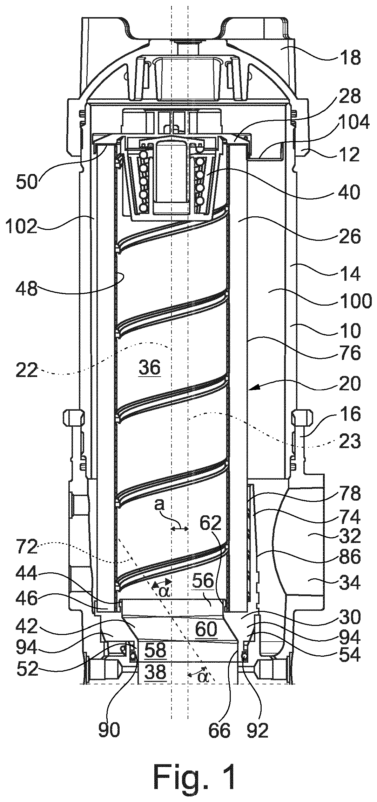

Ein in der Figur 1 als Ganzes mit 10 bezeichnetes, hohlzylinderförmiges Filtergehäuse weist ein Oberteil 12, ein Mittelteil 14 sowie ein Bodenteil 16 auf, die miteinander verschraubt sind. Insbesondere das Mittelteil 14 mit dem Bodenteil 16 können aber auch einteilig ausgebildet sein. Die in Figur 1 gezeigte Filtervorrichtung ist in ihrer Betriebsstellung gezeigt und das dem Bodenteil 16 entgegengesetzte obere Ende in Form des Oberteiles 12 ist durch einen verschraubten Gehäusedeckel 18 verschließbar. Im Filtergehäuse 10 ist ein als Ganzes mit 20 bezeichnetes Filterelement in tauschbarer Weise aufgenommen, wobei sich die Längsachse 22 des Filterelementes 20 parallel zu der Längsachse 23 des Filtergehäuses 10 erstreckt.

Das Filterelement 20 weist in üblicher Weise ein Elementmaterial 26 auf, das sich zwischen einer oberen Endkappe 28 und einer unteren Endkappe 30 erstreckt. Das Elementmaterial 26 dient der Abreinigung einer Partikelverschmutzung aus einem Fluidstrom. Zur Führung des Fluidstromes weist das Filtergehäuse 10 respektive das bodenseitige Gehäuseteil 16 eine Zuströmseite 32 für die Zufuhr eines Unfiltratstrroms auf, wobei die Zuströmseite 32 aus einer kreisrunden Gehäuseöffnung 34 im Bodenteil 16 gebildet ist. Ausgehend von dieser Zuströmseite 32 verteilt sich das Unfiltrat entlang des Außenumfanges des Filterelementes 20 und nach Durchströmen des Elementmaterials 26 von außen nach innen, gelangt der derart abgereingte Fluidstrom als Filtrat auf die Innenseite 36 des Filterelementes 20. In Fortführung des Fluidstroms gelangt dann das auf der Innenseite 36 des Filterelementes 20 befindliche Filtrat auf die bodenseitige Abgabeseite 38 des Filtergehäuses 10. Während die obere Endkappe 28 in üblicher Bauweise ein Bypassventil 40 aufweist, das bei zugesetztem respektive verblocktem Elementmaterial 26 eine Bypassströmung von der Unfiltrat- oder Rohseite direkt unter Umgehen des Elementmateriales 26 auf die Filtrat- oder Reinseite ermöglicht, weist die untere Endkappe 30 einen speziell ausgebildeten Durchtrittsbereich 42 für die Führung des Filtratstroms auf. Dieser Durchtrittsbereich 42 ist permanent fluidführend mit der Filtrat- oder Reinseite respektive der Innenseite 36 des Filterelementes 20 verbunden. Insoweit lässt sich die untere Endkappe 30 in einzelne Teile unterteilen mit verschiedenen Aufgabenbereichen. So weist die untere Endkappe 20 in üblicher Weise ein Aufnahmeteil 44 für die Aufnahme des Elementmaterials 26 auf. Hierfür weist das Aufnahmeteil 44 ein außenumfangsseitig verlaufendes ringförmiges Klebstoffbett 46 auf, über das das untere, stirnseitig freie Ende des Elementmaterials 26 verklebt ist. Ein regelmäßig auf der Innenumfangsseite des hohlzylindrischen Elementmaterials 26 angeordnetes fluiddurchlässiges Stützrohr 48 ist in diesem Bereich zusammen mit dem Elementmaterial 26 gleichfalls im Klebstoffbett 46 des Aufnahmeteiles 44 klebend festgelegt. Ebenso ist der obere stirnseitige Bereich von Elementmaterial 26 und Stützrohr 48 mit der oberen Endkappe 28 über ein weiteres Klebstoffbett 50 vergleichbar wie mit der unteren Endkappe 30 fest verbunden.

Des Weiteren weist die untere Endkappe 30 ein Anschlussteil 52 für das Anschließen des Filterelementes 20 an das bodenseitige Gehäuseteil respektive Bodenteil 16 auf. Zwischen dem Aufnahmeteil 44 und dem Anschlussteil 52 ist eine Versatzstufe 54 als zusätzliches Versatzteil vorhanden. Sowohl das Aufnahmeteil 44 als auch das Anschlussteil 52 sowie die Versatzstufe 54 als sogenanntes Versatzteil sind einstückiger Bestandteil der unteren Endkappe 30 und insbesondere aus einem Kunststoff-Formteil gebildet. Alle genannten Teile 44, 52 und 54 weisen innenumfangsseitig einzelne Durchgangsöffnungen 56, 58 und 60 auf, die kontinuierlich ineinander übergehen. Insbesondere sind die freien Querschnitte der einzelnen Durchgangsöffnungen 56, 58, 60 von Aufnahmeteil 44, Anschlussteil 52 und Versatzstufe 54, die jeweils senkrecht durch die Längsachse 22 des Filterelementes 20 gehen, gleich.

Die jeweilige Durchgangsöffnung 56, 58 von Aufnahmeteil 44 bzw. Anschlussteil 52 ist aus einem kreisringförmigen Hohlzylinder 62, 66 der unteren Endkappe 30 gebildet, wobei der Hohlzylinder 62 des Aufnahmeteiles 44 konzentrisch zu der Längsachse 22 des Filterelementes 20 verläuft. Der Hohlzylinder 66 des Anschlussteils 52 verläuft hingegen konzentrisch zu der Längsachse 23 des Filtergehäuses 10. Die Versatzstufe 54 spannt wiederum einen ringförmigen Hohlraum 70 mit einer schrägverlaufenden Begrenzungswand auf, dessen Längsachse 72 die beiden anderen Längsachsen 22 und 23, die mittig durch das Aufnahmeteil 44 bzw. Anschlussteil 52 gehen mit einem vorgebbaren Versatzwinkel α schneidet, der im vorliegenden Fall etwa 35° beträgt; sich aber in Winkelbereichen zwischen 15° bis 45° bewegen kann.

Wie sich aus den Figuren weiter ergibt, weist die eine untere Endkappe 30 einen Stromteiler 74 auf, der ausgehend von dem Aufnahmeteil 44 sich über eine vorgebbare Wegstrecke entlang zumindest eines Teils des Außenumfanges 76 des Elementmateriales 26 erstreckt. Das Elementmaterial 26 ist vorzugsweise in einzelne Filterfalten gelegt und der fiktive äußere Umfang der derart gebildeten Filterfalten (nicht dargestellt) begrenzt einen Ringspalt 78 mit der Innenumfangsseite des Stromteilers 74.

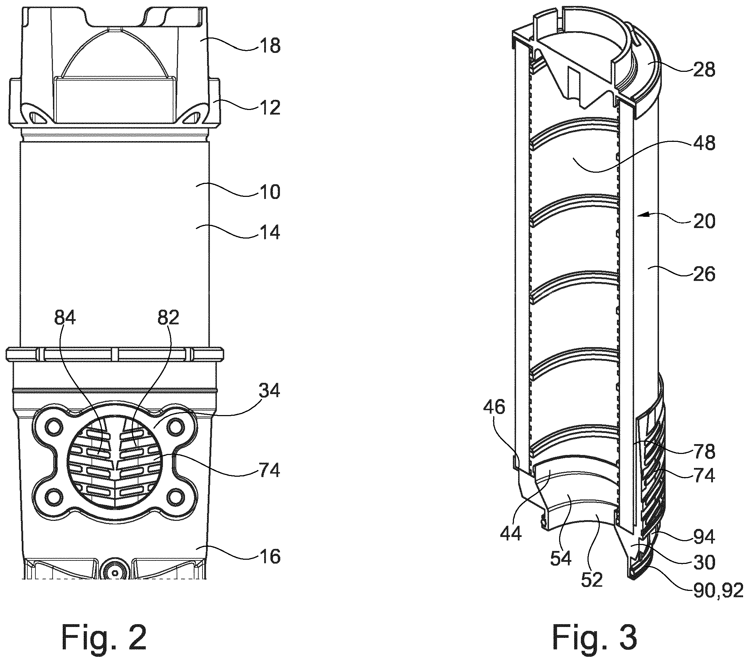

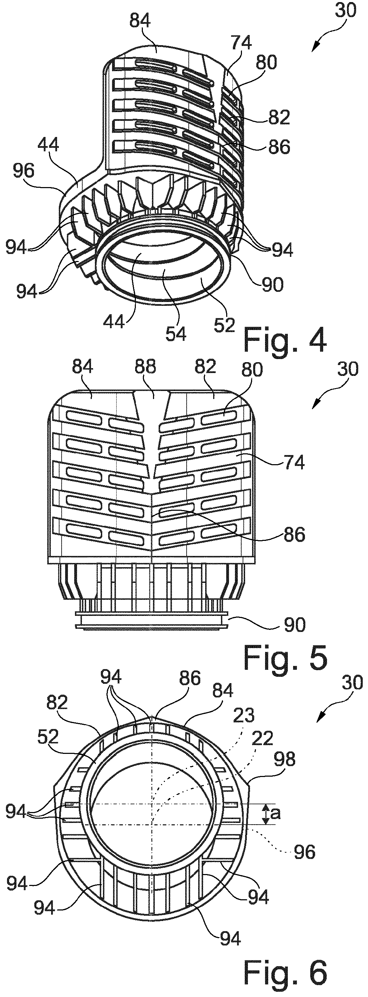

Wie insbesondere die Figur 4 zeigt, ist der Stromteiler 74 schalenförmig konzipiert und die Überdeckung des Elementmaterials 26 ist derart gewählt, dass bei einem Anströmen des Elementmaterials 26 mit Fluid von der Zuströmseite 32 her das Elementmaterial 26 geschützt ist. Hierfür übergreift, wie in den Figuren 1 und 2 dargestellt, der Stromteiler 74 die die Zuströmseite 32 mit Unfiltrat bildende kreisringförmige Gehäuseöffnung 34 von innen her unter Einhalten eines vorgebbaren Abstandes.

Wie insbesondere die Figuren 4 und 5 zeigen, ist der Stromteiler 74 für eine verbesserte Strömungsführung mit kanalartig verlaufenden Fluiddurchlässen 80 versehen. Dabei sind die kanalartigen Fluiddurchlässe 80 in mindestens zwei Gruppen 82, 84 unterteilt, die sich V-förmig von einer senkrechten Mittenachse 86 des Stromteilers 74 wegerstrecken, vorzugsweise keilförmig ausgebildet eine gleichmäßige Strömungsaufteilung des anströmenden Fluids in zwei voneinander verschiedene Richtungen ermöglicht, nämlich einmal in Richtung zu der einen Gruppe 82 sowie zu der anderen Gruppe 84. Gemäß der Darstellung nach der Figur 5 kann ein V-förmiger Mittenbereich 88 ausgehend von der darunterliegend angeordneten Mittenachse 86 ohne kanalartige Fluiddurchlässe 80 ausgebildet sein, so dass in diesem gleichfalls V-förmigen Bereich als Prallschutz ein massiver Schild ausgebildet ist. Die kanalartigen Fluiddurchlässe 80 sind jeweils durch leisten- oder streifenförmige Kanäle im Schild des Stromteilers 74 gebildet und in die Vertiefung dieser Kanäle sind in der Art von durchgehenden Längsnuten die langgestreckten Fluiddurchlässe 80 eingebracht, so dass ausgehend von der Zuströmseite 32 in das Filtergehäuse 10 eintretendes Fluid vorgebbaren Druckes in der Art einer Blende durch die einzelnen kanalartigen Fluiddurchlässe 80 gebracht wird, das in radialer Richtung gesehen über den Ringspalt 78 auf das Elementmaterial 26 trifft, so dass insoweit eine vergleichmäßigte Anströmung der einzelnen Filterfalten gewährleistet ist, ohne dass es zu Druckspitzen kommt, die das Elementmaterial 26 schädigen könnten.

Ferner weist gemäß den Darstellungen nach den Figuren 1, 3, 4 und 5 das Anschlussteil 52 an seinem unteren Endbereich außenumfangsseitig eine Ringnut 90 für die Aufnahme einer Dichteinrichtung 92 auf, in Form eines O-Dichtringes. Bei einer nicht näher dargestellten Ausführungsform besteht auch die Möglichkeit eine dahingehende Dichteinrichtung 92 aus einer angespritzten Dichtkante auszubilden, so dass eine elastomerfreie Abdichtung möglich ist. Gemäß der Darstellung nach der Figur 1 wird aber über die jeweilige Dichteinrichtung 92 das Filterelement 20 im unteren Fußbereich, sprich mit seiner unteren Endkappe 30, abgedichtet im Bodenteil 16 des Filtergehäuses 10 in tauschbarer Weise geführt. Für einen dahingehenden Tausch eines verschmutzten Filterelementes 20 gegen ein Neuelement braucht nur das Oberteil 12 in Form des Gehäusedeckels 18 vom Mittelteil 14 des Filtergehäuses 10 abgeschraubt zu werden, und insoweit kann das Filterelement 20 als Ganzes von oben her von Hand herausgezogen werden, so dass sich ein Filterelement ergibt, das sich außerhalb des Filtergehäuses 10 befindet, gemäß der Darstellung nach der Figur 3, wobei bei dem dahingehenden Filterelement 20 auf das Bypassventil 40 verzichtet wurde und insoweit die obere Endkappe 28 geschlossen ausgebildet ist. In umgekehrter Reihenfolge wird dann ein Neuelement eingesetzt und die Vorrichtung kann wieder in Betrieb genommen werden.

Wie sich insbesondere aus den Figuren 4 bis 6 ergibt, weist die als Kunststoffformteil ausgebildete untere Endkappe 30 unterhalb des Aufnahmeteiles 44 einzelne nach unten vorspringende Längsrippen 94 unterschiedlicher Baulänge auf, die als fiktive Umhüllende 96 von einem Polygonzug eingefasst sind, wie er strichliniert in Figur 6 wiedergegeben ist. Dabei folgt die Umhüllende 96 zumindest teilweise dem Umfangsrand 98 der unteren Endkappe 30 nach und die angesprochenen Längsrippen 94 versteifen, insbesondere den Übergangsbereich zwischen Aufnahmeteil 44 und Anschlussteil 52 in Form der Versatzstufe 54, in dem die Längsrippen 94 selbst die Versatzstufe 54 umfassen. Die einzelnen Längsrippen 94 sind dabei gemäß der Darstellung nach der Figur 6 in vier unterschiedliche Gruppen zusammengefasst "oben, unten, rechts und links", wobei die rechte und die linke Gruppe gleich ausgebildete Längsrippen 94 aufweisen und ansonsten stehen die in einer Gruppe parallel zueinander verlaufenden und vertikal angeordneten, voneinander beabstandeten Längsrippen 94 in fiktiver Verlängerung senkrecht auf einer benachbarten Gruppe, wiederum mit ihrer fiktiven Verlängerung.

Neben einer Aussteifung der unteren Endkappe 30 ermöglicht die Längsrippenkonstruktion auch eine genaue Positionierung des Filterelementes 20 innerhalb des Filtergehäuses 10, indem eben der Stromteiler 74 definiert benachbart gegenüber der Zuströmseite 32 mit der Gehäuseöffnung 34 angeordnet ist.

Durch die asymmetrische Ausgestaltung der unteren Endkappe 30 lässt sich gemäß der Längsschnittdarstellung nach der Figur 1 das Filterelement 20 im Filtergehäuse 10 versetzt unterbringen, d.h. die Längsachse 22 des Filterelementes 20 weist einen Versatz a gegenüber der Längsachse 23 des Filtergehäuses 10 auf und insoweit kommt es dann auf der Zuströmseite 32 mit dem Unfiltratstrom zu einem vergrößerten, spaltförmigen Ringraum 100 und auf der demgegenüber abgewandten Seite ist ein verringerter,spaltförmiger Ringraum 102 zwischen dem Filterelement 20 und dem Filtergehäuse 10 geschaffen, so dass insgesamt das Filterelement 20 in asymmetrischer Einbauweise im Filtergehäuse 10 aufgenommen ist. Demgemäß ergibt sich auch zwangsläufig ein vergrößerter Abstand zwischen dem Stromteiler 74 und der Zuströmseite 32 im Filtergehäuse 10.

Mit der erfindungsgemäßen Lösung kann auf ein Filter-Standardelement zurückgegriffen werden, das mit einer asymmetrischen unteren Endkappe 30 versehen, in Kombination mit einem angespritzten Anströmschutz in Form des Stromteilers 74 in ein Standard-Filtergehäuse 10 eingesetzt werden kann. Wie bereits ausgeführt, sind die Einführrippen in Form der Längsrippen 94 an der unteren Endkappe 30 in Form einer sogenannten O-Ringkappe als Polygonzug ausgeführt, so dass das Filterelement 20 als Ganzes immer positionsgenau im Filtergehäuse 10 montiert werden kann und gewährleistet ist, dass der Stromteiler 74 immer genau am Filtereinlass sich befindet, in Form der kreisringförmigen Gehäuseöffnung 34, die die Zuströmseite 32 der Vorrichtung bildet. Die aufgezeigte, zurückversetzte Positionierung des Filterelementes 20 außerhalb der Gehäusemitte, also außerhalb der Längsachse 23 des Filtergehäuses 10, führt zu einem vergrößerten spaltförmigen Ringraum 100 zwischen Unfiltrateintritt 34 und dem Filterelement 20, wodurch das Δp durch geringere Strömungsverluste reduziert wird.

Die Kombination Element 20 mit dem Anströmschutz, sprich Stromteiler 74, führt zu einer Strömungsoptimierung und zu einer homogeneren Strömungsverteilung bzw. Durchströmung des kompletten Filterelementes 20 entlang seiner Längsachse 22. Des Weiteren wird das Element 20 im Eintrittsbereich des Fluids geschützt. Zusätzlich dazu besteht die Möglichkeit durch Verwendung eines speziellen Mattenaufbaus in Kombination mit der neuen asymmetrischen Kappe 30 die Möglichkeit die hydraulische Last des Elements zu erhöhen und somit kleiner bauen zu können, bei gleichbleibender Filterleistung im Vergleich zu einer symmetrischen Standardausführung. Damit das Filterelement 20 gemäß der Darstellung nach der Figur 1 auch im Bereich seiner oberen Endkappe 28 sicher in seiner asymmetrischen Lage im Filtergehäuse 10 aufgenommen ist, kann die Endkappe 28 eine segmentförmige Verbreiterung 104 aufweisen, die als Blechformteil ausgebildet mit einem nach oben vorstehenden Rand sich auf der Innenumfangsseite des Mittelteiles 14 des Filtergehäuses 10 abstützen kann, so dass das Filterelement 20 über seine beiden Endkappen 28, 30 funktionssicher im Filtergehäuse 10 aufgenommen ist.

## Patentansprüche

1. Filterelement, zumindest bestehend aus einem Elementmaterial (26), das sich zwischen zwei Endkappen (28, 30) erstreckt, von denen zumindest eine Endkappe (30) ein Aufnahmeteil (44) für die Aufnahme des Elementmaterials (26) aufweist sowie ein Anschlussteil (52) für das Anschließen an ein Gehäuseteil (16), wobei sowohl das Aufnahmeteil (44) als auch das Anschlussteil (52) innenumfangsseitig Durchgangsöffnungen (56, 58) für den Durchtritt von Fluid aufweisen, die gegenüber der Längsachse (22) des Filterelementes (20) zueinander versetzt angeordnet sind, **dadurch gekennzeichnet, dass** zwischen dem Aufnahmeteil (44) und dem Anschlussteil (52) eine Versatzstufe (54) angeordnet ist, die ebenfalls eine Durchgangsöffnung (60) aufweist und dass die freien Querschnitte der Durchgangsöffnungen (56, 58, 60) von Aufnahmeteil (44), Anschlussteil (52) und Versatzstufe (54), die jeweils senkrecht durch die Längsachse (22) des Filterelementes (20) gehen, gleich sind.

2. Filterelement nach Anspruch 1, **dadurch gekennzeichnet, dass** die jeweilige Durchgangsöffnung (56, 58) von Aufnahmeteil (44) und Anschlussteil (52) aus einem kreisringförmigen Hohlzylinder (62, 66) gebildet ist, dass der Hohlzylinder (62) des Aufnahmeteiles (44) konzentrisch zu der Längsachse (22) des Filterelementes (20) verläuft, dass der Hohlzylinder (66) des Anschlussteils (52) konzentrisch zu der Längsachse (23) des Filtergehäuses (10) mit einem Versatz (a) parallel zur Längsachse (22) des Filterelementes (20) verläuft, und dass die Versatzstufe (54) einen ringförmigen Hohlraum (70) aufspannt, dessen Längsachse (72) die beiden anderen Längsachsen (22, 23) mit einem vorgebbaren Versatzwinkel α schneidet, der vorzugsweise zwischen 15 bis 45°, besonders bevorzugt 35°, beträgt.

3. Filterelement nach Anspruch 1 oder 2, **dadurch gekennzeichnet, dass** die eine Endkappe (30) einen Stromteiler (74) aufweist, der ausgehend von dem Aufnahmeteil (44) sich über eine vorgebbare Wegstrecke entlang zumindest eines Teils des Außenumfanges (76) des Elementmaterials (26) erstreckt.

4. Filterelement nach Anspruch 3, **dadurch gekennzeichnet, dass** der Stromteiler (74) schalenförmig konzipiert einen Teil des Elementmaterials (26) überdeckt und dass die vorgebbare Wegstrecke derart gewählt ist, dass bei einem Anströmen des Elementmaterials (26) mit Fluid von der Zuströmseite (32) her das Elementmaterial (26) geschützt ist.

5. Filterelement nach Anspruch 3 oder 4, **dadurch gekennzeichnet, dass** der Stromteiler (74) für eine verbesserte Strömungsführung mit kanalartig verlaufenden Fluiddurchlässen (80) versehen ist.

6. Filterelement nach Anspruch 5, **dadurch gekennzeichnet, dass** die kanalartigen Fluiddurchlässe in mindestens zwei Gruppen (82, 84) unterteilt sind, die sich V-förmig von einer Mittenachse (86) des Stromteilers (74) wegerstrecken, der vorzugsweise keilförmig ausgebildet eine gleichmäßige Strömungsaufteilung des anströmenden Fluids in zwei voneinander verschiedene Richtungen ermöglicht.

7. Filterelement nach einem der vorstehenden Ansprüche, **dadurch gekennzeichnet, dass** das Anschlussteil (52) außenumfgangsseitig eine Ringnut (90) für die Aufnahme einer Dichteinrichtung (92) aufweist.

8. Filterelement nach einem der vorstehenden Ansprüche, **dadurch gekennzeichnet, dass** die eine Endkappe (30) im Bereich der Versatzstufe (54) parallel zu der Längsachse (22) des Filterelements (20) ausgerichtet, einzelne voneinander beabstandete Längsrippen (94) aufweist, die als fiktive Umhüllende (96) von einem Polygonzug eingefasst sind.

9. Filtervorrichtung mit einem Filtergehäuse, in dem ein Filterelement nach einem der vorstehenden Ansprüche aufgenommen ist, **dadurch gekennzeichnet, dass** das Filterelement (20) im Filtergehäuse (10) derart mittels einer Endkappe (30) asymmetrisch aufgenommen ist, dass auf der Zuströmseite (32) mit dem Unfitratstrom ein vergrößerter (100) und auf der demgegenüber abgewandten Seite ein verringerter Ringraum (102) zwischen dem Filterelement (20) und dem Filtergehäuse (10) geschaffen ist.

10. Filtervorrichtung nach Anspruch 9, **dadurch gekennzeichnet, dass** die Zuströmseite (32) im Filtergehäuse (10) für die Zufuhr des Unfiltratstroms mit einem vorgebbaren Abstand von dem Stromteiler (74) des Filterelementes (20) überdeckt ist.

## Claims

1. Filter element, at least consisting of an element material (26), which extends between two end caps (28, 30), at least one end cap (30) of which has a receiving part (44) for receiving the element material (26) and a connecting part (52) for connecting to a housing part (16), both the receiving part (44) and the connecting part (52) having, on the inner circumference thereof, through openings (56, 58) for the passage of fluid which are offset from one another relative to the longitudinal axis (22) of the filter element (20), **characterised in that** an offset step (54) is arranged between the receiving part (44) and the connecting part (52) and also has a through opening (60), and **in that** the free cross-sections of the through openings (56, 58, 60) of the receiving part (44), connecting part (52) and offset step (54), which each pass perpendicularly through the longitudinal axis (22) of the filter element (20), are the same.

2. Filter element according to claim 1, **characterised in that** the respective through opening (56, 58) of the receiving part (44) and the connecting part (52) is formed by a circular ring-shaped hollow cylinder (62, 66), **in that** the hollow cylinder (62) of the receiving part (44) runs concentrically with respect to the longitudinal axis (22) of the filter element (20), **in that** the hollow cylinder (66) of the connecting part (52) runs concentrically with respect to the longitudinal axis (23) of the filter housing (10) with an offset (a) parallel to the longitudinal axis (22) of the filter element (20), and **in that** the offset step (54) spans an annular cavity (70), the longitudinal axis (72) of which intersects the two other longitudinal axes (22, 23) with a predefinable offset angle α, which is preferably between 15 to 45°, more preferably 35°.

3. Filter element according to either claim 1 or claim 2, **characterised in that** the one end cap (30) comprises a flow divider (74), which, starting from the receiving part (44), extends over a predefinable distance along at least one part of the outer circumference (76) of the element material (26).

4. Filter element according to claim 3, **characterised in that** the flow divider (74) is designed in the form of a bowl and covers part of the element material (26) and **in that** the predefinable distance is selected such that the element material (26) is protected when fluid flows onto the element material (26) from the inflow side (32).

5. Filter element according to either claim 3 or claim 4, **characterised in that** the flow divider (74) is provided with fluid passages (80) running in a channel-like fashion for improved flow guidance.

6. Filter element according to claim 5, **characterised in that** the channel-like fluid passages are subdivided into at least two groups (82, 84) which extend in a V-shape away from a central axis (86) of the flow divider (74), which is preferably configured to be wedge-shaped and allows a uniform flow distribution of the inflowing fluid in two mutually different directions.

7. Filter element according to any of the preceding claims, **characterised in that** the connecting part (52) comprises an annular groove (90) for receiving a sealing apparatus (92) on its outer circumference.

8. Filter element according to any of the preceding claims, **characterised in that** one end cap (30), arranged parallel to the longitudinal axis (22) of the filter element (20) in the region of the offset step (54), comprises individual longitudinal ribs (94) spaced apart from one another, which are enclosed by a polygon as a notional enclosing end (96).

9. Filter device having a filter housing in which a filter element according to any of the preceding claims is received, **characterised in that** the filter element (20) is received asymmetrically in the filter housing (10) by means of an end cap (30) such that, on the inflow side (32) with the unfiltered medium stream, an enlarged space (100) is created and, on the opposite side facing away therefrom, a reduced annular space (102) is created between the filter element (20) and the filter housing (10).

10. Filter device according to claim 9, **characterised in that** the inflow side (32) in the filter housing (10) for supplying the unfiltered medium stream is covered by the flow divider (74) of the filter element (20) at a predefinable distance.

## Revendications

1. Elément filtrant, constitué au moins d'une matière (26) d'élément, qui s'étend entre deux coiffes (28, 30) d'extrémité, dont au moins une coiffe (30) d'extrémité à une partie (44) de réception pour la réception de la matière (26) d'élément ainsi qu'une partie (52) de raccordement pour le raccordement à une partie (16) d'enveloppe, dans lequel à la fois la partie (44) de réception et la partie (52) de raccordement ont, du côté du pourtour intérieur, des ouvertures (56, 58) traversantes pour le passage de fluide, qui sont décalées les unes par rapport aux autres suivant l'axe (22) longitudinal de l'élément (20) filtrant, **caractérisé en ce qu'**entre la partie (44) de réception et la partie (52) de raccordement, est disposé un gradin (54) de décalage, qui a également une ouverture (60) traversante, et **en ce que** les sections transversales libres des ouvertures (56, 58, 60) traversantes de la partie (44) de réception, de la partie (52) de raccordement et du gradin (54) de décalage, qui passent respectivement perpendiculairement à l'axe (22) longitudinal de l'élément (20) filtrant, sont égales.

2. Elément filtrant suivant la revendication 1, **caractérisé en ce que** l'ouverture (56, 58) traversante respective de la partie (44) de réception et de la partie (52) de raccordement est formée d'un cylindre (62, 66) creux en forme d'anneau de cercle, **en ce que** le cylindre (62) creux de la partie (44) de réception s'étend concentriquement à l'axe (22) longitudinal de l'élément (20) filtrant, **en ce que** le cylindre (66) creux de la partie (52) de raccordement s'étend concentriquement à l'axe (23) longitudinal de l'enveloppe (10) du filtre avec un décalage (a) parallèlement à l'axe (22) longitudinal de l'élément (20) filtrant, et **en ce que** le gradin (54) de décalage détermine un espace (70) creux de forme annulaire, dont l'axe (72) longitudinal coupe les deux autres axes (22, 23) longitudinaux suivant un angle α de décalage pouvant être donné à l'avance, qui est, de préférence, compris entre 15 et 45°, en étant d'une manière particulièrement préférée de 35°.

3. Elément filtrant suivant la revendication 1 ou 2, **caractérisé en ce que** la une coiffe (30) d'extrémité a un diviseur (74) de courant, qui, à partir de la partie (44) de réception, s'étend sur un parcours pouvant être donné à l'avance le long d'au moins une partie du pourtour (76) extérieur de la matière (26) d'élément.

4. Elément filtrant suivant la revendication 3, **caractérisé en ce que** le diviseur (74) de courant conçu en forme de coque recouvre une partie de la matière (26) d'élément, et **en ce que** le parcours pouvant être donné à l'avance est choisi, de manière à ce que, lorsque du fluide arrive sur la matière (26) d'élément depuis le côté (32) d'afflux, la matière (26) d'élément soit protégée.

5. Elément filtrant suivant la revendication 3 ou 4, **caractérisé en ce que** le diviseur (74) de courant est pourvu, pour une conduite améliorée de l'écoulement, de traversées (80) pour du fluide s'étendant à la manière d'un canal.

6. Elément filtrant suivant la revendication 5, **caractérisé en ce que** les traversées pour du fluide, à la manière d'un canal, sont subdivisées en au moins deux groupes (82, 84), qui s'éloignent en forme de V d'un axe (86) médian du diviseur (74) de courant, lequel, constitué de préférence de manière cunéiforme, permet une répartition uniforme de l'écoulement du fluide arrivant dans deux directions différentes l'une de l'autre.

7. Elément filtrant suivant l'une des revendications précédentes, **caractérisé en ce que** la partie (52) de raccordement a, du côté du pourtour extérieur, une rainure (90) annulaire pour la réception d'une garniture (92) d'étanchéité.

8. Elément filtrant suivant l'une des revendications précédentes, **caractérisé en ce que** la une coiffe (30) d'extrémité a, dirigées parallèlement à l'axe (22) longitudinal de l'élément (20) filtrant dans la partie du gradin (54) de décalage, des nervures (94) longitudinales individuelles à distance les unes des autres, qui sont encadrées d'un tracé polygonal comme enveloppe (96) fictive.

9. Dispositif de filtration, comprenant une enveloppe de filtre, dans lequel un élément filtrant suivant l'une des revendications précédentes est reçu, **caractérisé en ce que** l'élément (20) filtrant est reçu de manière asymétrique dans l'enveloppe (10) du filtre, au moyen d'une coiffe (30) d'extrémité, de manière à ménager entre l'élément (20) filtrant et l'enveloppe (10) du filtre du côté (32) d'afflux du courant de non filtrat, un espace (100) annulaire agrandi et du côté opposé, un espace (102) annulaire diminué.

10. Dispositif de filtration suivant la revendication 9, **caractérisé en ce que** le côté (32) d'afflux dans l'enveloppe (10) du filtre est recouvert, pour l'apport du courant de non filtrat, à une distance pouvant être donnée à l'avance du diviseur (74) de courant de l'élément (20) filtrant.
